# EUROPÄISCHE PATENTSCHRIFT

(11) **EP 1 450 906 B1**
(45) Veröffentlichungstag und Bekanntmachung des Hinweises auf die Patenterteilung: **15.06.2005**
(21) Anmeldenummer: 03722459.9
(22) Anmeldetag: 11.04.2003
(51) Int. Cl.: A63C 11/22, A45B 9/00

(54) **LÄNGENVERSTELLBARES ROHR, INSBESONDERE FÜR STÖCKE**
ADJUSTABLE-LENGTH TUBE, IN PARTICULAR FOR POLES
TUBE REGLABLE EN LONGUEUR, EN PARTICULIER POUR BATONS

(30) Priorität: 08.05.2002 DE 20207554 U
(43) Veröffentlichungstag der Anmeldung: 01.09.2004
(73) Patentinhaber: Lenhart, Klaus, 73275 Ohmden (DE)
(72) Erfinder: Lenhart, Klaus, 73275 Ohmden (DE)
(74) Vertreter: Fuhlendorf, Jörn, Dipl.-Ing.
(86) Internationale Anmeldenummer: PCT/EP2003/003805
(87) Internationale Veröffentlichungsnummer: WO 2003/095041

(56) Entgegenhaltungen:
- DE-B- 1 058 889
- DE-U- 9 419 707
- US-A- 6 027 087

## Beschreibung

Die vorliegende Erfindung bezieht sich auf ein längenverstellbares Rohr, insbesondere für Stöcke, nach dem Oberbegriff des Anspruchs 1.

Bei einem derartigen aus dem DE 297 06 849 U1 bekannten längenverstellbaren Rohr ist das Spreizelement zum Innenrohr hin mit einem sich verjüngenden Innenkonus versehen, während das gegenläufige mit dem Außenkonus versehene Innenelement zum Festklemmen der Spreizvorrichtung mit der Verstellschraube zum Innenrohr hin verstellt wird. Auf diese Weise ergibt sich zwar eine relativ parallele Klemmung über die gesamte axiale Länge des Spreizelementes, jedoch hat sich herausgestellt, dass bei stoßartigen Belastungen von der Griffseite eines längenverstellbaren Stockes auf die Stockspitze eine axiale Verschiebung des Außenrohres gegenüber dem Innenrohr nicht immer, insbesondere dann nicht vermieden werden kann, wenn bei der Verdrehbewegung zum Festklemmen keine ausreichend hohe Kraft aufgewendet worden ist.

Aus dem DE 297 08 829 U1 ist darüber hinaus ein längenverstellbares Rohr bekannt, bei dem das mit dem Außenkonus versehene Innenelement durch das vordere freie Ende der Verstellschraube gebildet und das mit dem Innenkonus versehene Spreizelement auf der Verstellschraube axial bewegt ist. Hierbei ist zwar der Innenkonus des Spreizelementes zum Innenrohr hin geöffnet, jedoch ergeben sich hier dieselben vorgenannten Nachteile, wenn das Spreizelement in gespreiztem Zustand axial festgelegt ist. Auch hier kann eine Relativbewegung zwischen Außenrohr und Spreizelement erfolgen.

Aufgabe der vorliegenden Erfindung ist es, ein längenverstellbares Rohr, insbesondere für Stöcke, der eingangs genannten Art zu schaffen, das bei stoßartigen axialen Belastungen sich eher weiter festklemmt denn verstellt bzw. nachgibt.

Zur Lösung dieser Aufgabe sind bei einem längenverstellbaren Rohr, insbesondere für Stöcke, der genannten Art die im Anspruch 1 angegebenen Merkmale vorgesehen.

Durch die erfindungsgemäßen Merkmale ist erreicht, dass sich bei einer oben erwähnten stoßartigen Belastung die Haltekraft zwischen Spreizelement bzw. Innenrohr und Außenrohr erhöht, da durch die relative axiale Beweglichkeit von Innenelement und Spreizelement sich das erstere dabei weiter über in Innenkonus des Spreizelements schieben kann. Dadurch kommt es auch bei mit zu geringem Drehmoment angezogenen Teleskopmechanismen in erster Linie zu einer weiteren Aufspreizung, die wiederum die Haltekraft in Belastungsrichtung verstärkt, so dass auch in diesen Fällen eine Verstellung bzw. Relativbewegung verhindert ist.

Eine verkantungsfreie Führung des Spreizelementes innerhalb der gegebenen axialen Beweglichkeit, ist durch die Merkmale nach Anspruch 2 und/oder 3 gegeben.

Vorteilhafte Ausgestaltungen hinsichtlich des äußeren Anschlags für das Spreizelement ergeben sich aus den Merkmalen des Anspruchs 4 oder denen des Anspruchs 5. Im ersteren Falle erfolgt die Montage des Spreizelementes vor dem Aufbringen des äußeren Anschlages, während im zweiteren Falle bei bereits vorgesehenem Anschlag das Spreizelement in der Weise ausgebildet ist, dass es von radial her über die Verstellschraube und das Innenelement gebracht werden kann.

Eine vorteilhafte Ausgestaltung des inneren Anschlags ergibt sich durch die Merkmale nach Anspruch 6.

Um eine drehfeste axiale Beweglichkeit des Innenelements gegenüber dem Spreizelement zu erreichen, sind die Merkmale nach Anspruch 7 vorgesehen.

Weitere Einzelheiten der Erfindung sind der folgenden Beschreibung zu entnehmen, in der die Erfindung anhand der in der Zeichnung dargestellten Ausführungsbeispiele näher beschrieben und erläutert ist. Es zeigen:
- Figur 1: in teilweise längsgeschnittener und abgebrochener Darstellung ein längenverstellbares Rohr gemäß einem ersten Ausführungsbeispiel vorliegender Erfindung,
- Figur 2: eine um 90° gegenüber der Figur 1 gedrehte, teilweise längsgeschnittene Ansicht des ersten Ausführungsbeispieles,
- Figur 3: einen Schnitt längs der Linie III-III der Figur 2,
- Figur 4: eine der Figur 1 entsprechende Darstellung, jedoch gemäß einem zweiten Ausführungsbeispiel vorliegender Erfindung und
- Figur 5: eine der Figur 2 entsprechende Darstellung, jedoch gemäß dem zweiten Ausführungsbeispiel vorliegender Erfindung.

Bei den in der Zeichnung gemäß zweier Ausführungsbeispiele dargestellten Verbindungsabschnitten eines längenverstellbaren Rohres 10 bzw. 110 ist ein Innenrohr 11, 111 in einem Außenrohr 12, 112 teleskopartig geführt. Hierzu ist das Innenrohr 11, 111 an seinem dem Außenrohr 12, 112 zugewandten Ende 13, 113 mit einer Spreizvorrichtung 15, 115 versehen, mittels welcher das Innenrohr 11, 111 im Außenrohr 12, 112 an beliebigen Position klemmend festlegbar ist.

Die Spreizvorrichtung 15, 115 besitzt ein Außenelement in Form eines Spreizelementes 16, 116, ein Innenelement 17, 117 und eine Verstellschraube bzw. Außengewindestange 18, 118. Die in axialer Richtung des Rohres 10, 110 angeordnete Außengewindestange 18, 118 ist mit ihrem einen Endbereich am Einschubende 13, 113 des Innenrohrs 11, 111 drehfest gehalten. Hierzu ist die Außengewindestange 18, 118 in einen Endstopfen 19, 119 eingesteckt, eingeschraubt oder an diesem einstückig angeformt oder dgl. und in diesem durch Kleben oder dgl. axial festgelegt und drehfest gehalten. Der Endstopfen 19, 119 ist im Innenrohr 11, 111 ebenfalls axial festgelegt und drehfest gehalten.

Auf die Außengewindestange 18, 118 ist das Innenelement 17, 117 mit seinem axialen zentrischen Innengewinde 21, 121 aufgeschraubt. Das Innenelement 17, 117 ist außenseitig mit einem Konus 22, 122 versehen bzw. kegelförmig ausgebildet. Der Außenkonus 22, 122 verjüngt sich zum freien Ende der Außengewindestange 18, 118 hin. Die Außengewindestange 18, 118 durchdringt die Innengewindebohrung 21, 121 des Innenelements 17, 117 und ist an ihrem herausragendem freien Ende mit einem äußeren Anschlag 26, 126 drehfest verbunden.

Das außenseitige Spreizelement 16, 116 besitzt an seinem spreizbaren Hauptkörper 23, 123 einen Innenkonus bzw. Innenkegel 27, 127, dessen Steilheit derjenigen des Außenkonus bzw. -kegels 22, 122 des Innenelements 17, 117 entspricht. Gemäß der zeichnerischen Darstellung ist das Innenelement 17, 117 in dem gegengerichteten Spreizelement 16, 116 spielfrei aufgenommen, wobei der Außenkonus 22, 122 kürzer ist als der Innenkonus 27, 127. Entsprechend der dargestellten Anordnung öffnet sich der Innenkonus bzw. Innenkegel 27, 127 des Spreizelementes 16, 116 zum Innenrohr 11, 111 hin. Beispielsweise kann das Spreizelement 16, 116 aus einem Kunststoff und das Innenelement 17, 117 aus einem Metall oder Kunststoff sein.

Der einstückige Endstopfen 19, 119, ist mit einem im Innenrohr 11, 111 dreh- und verschiebefest gehaltenen Innenteil 31, 131 und mit einem Bund 32, 132 versehen, der auf der Ringstirn des Innenrohrs 11, 111 aufliegt. Vom Bund 32, 132 abstehend ist ein durchmesserkleinerer Führungsansatz 33, 133 für das Spreizelement 16, 116 vorgesehen.

Das Spreizelement 16, 116 ist etwa topfförmig, wobei der Topfboden 36, 136 eine Durchgangsbohrung 37, 137 besitzt, die vom freien Endbereich der Verstellschraube 18, 118 durchdrungen ist. Der Topfboden 36, 136 ist relativ zur Verstellschraube 18, 118 axial beweglich. Der Hauptkörper 23, 123 des Spreizelementes 16, 116, der außenumfangsseitig mit einem oder mehreren Reibbelägen versehen, beschichtet oder dgl. oder durch seine Oberflächengestaltung (beispielsweise Längsrippen) so ausgebildet sein kann, um eine erhöhte Reibkraft gegenüber dem Innenumfang des Außenrohrs 12, 112 zu erreichen, besitzt an seinem dem Topfboden 36, 136 abgewandten und dem Innenrohr 11, 111 zugewandten Ende einen außendurchmesserkleineren zylindrischen Ansatz 38, 138, in den endseitig der Führungsansatz 33, 133 greift. Dabei ist zwischen dem Führungsansatz 33, 133 und dem Spreizelement 16, 116 soviel Spiel vorhanden, dass sich das letztere ungehindert axial und radial bewegen kann. Das Spreizelement 16, 116 befindet sich somit vorzugsweise in geringen Grenzen axial beweglich zwischen dem äußeren Anschlag 26, 126 am freien Ende der Verstellschraube 18, 118 und einer inneren Anschlagfläche 28, 128, die durch die Ringfläche des Bundes 32, 132 um den Führungsansatz 33, 133 gebildet ist. Der Abstand der beiden Anschlagflächen 24, 124 und 28, 128 ist etwas größer als die axiale Länge des Spreizelementes 16, 116 zwischen der Außenfläche des Topfbodens 36, 136 und der Ringstirn des zylindrischen Ansatzes 38, 138.

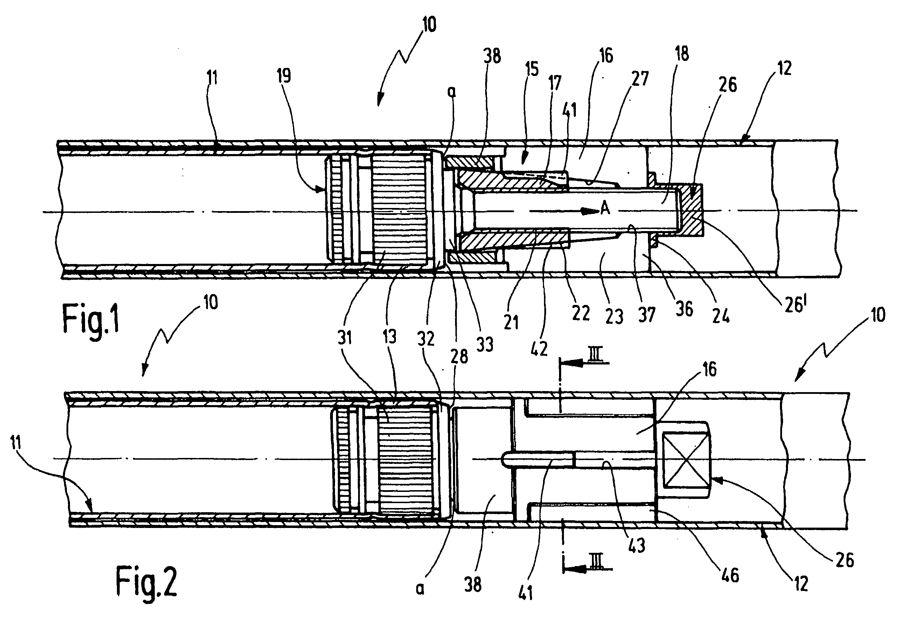

Beim Ausführungsbeispiel der Figuren 1 bis 3 ist der äußere Anschlag 26 durch eine Kappe 26' gebildet, die auf das freie Ende der Verstellschraube 18 bspw. aufgeschraubt, aufgepresst, aufgeklebt mit einem Kunststoff umspritzt oder in sonstiger Weise befestigt ist. Die Kappe 26' besitzt einen radialen Rand 24, an dem das Spreizelement 16 zur Anlage kommen kann.

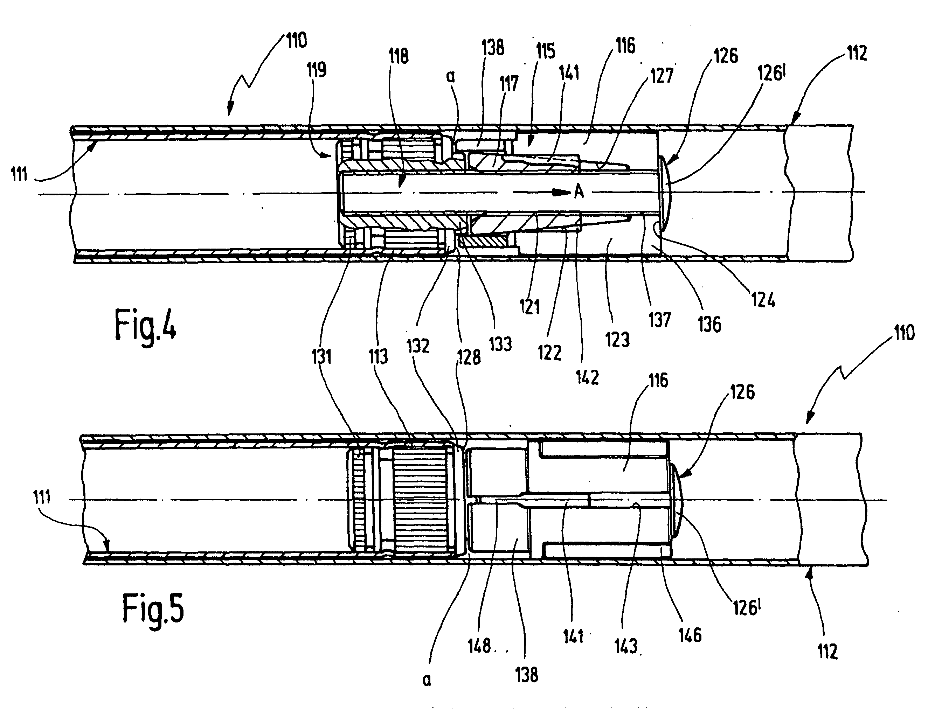

Beim Ausführungsbeispiel der Figuren 4 und 5 ist der äußere Anschlag 126 als an das freie Ende der Verstellschraube 118 angeformter Kopf 126' ausgebildet, dessen innere Ringfläche 124 die Anschlagfläche für das Spreizelement 116 bildet.

Das Innenelement 17, 117 besitzt an zwei einander diametral gegenüberliegenden Umfangsbereichen des Außenkonus 22, 122 jeweils einen Flügel 41, 42 bzw. 141, 142, dessen längsverlaufende Stirnfläche parallel zur Stockachse verläuft. Jeder Flügel 41, 42 bzw. 141, 142 ist in einem entsprechend breiten Schlitz 43, 44 bzw. 143, 144 des Spreizelementes 16, 116 axial geführt. Auf diese Weise ist das Innenelement 17, 117 bei seiner axialen Bewegung relativ zum Spreizelement 16, 116 gegenüber diesem unverdrehbar. Die beiden Schlitze 43, 44 bzw. 143, 144 sind im Wesentlichen über die Längserstreckung des Hauptkörpers 23, 123 des Spreizelementes 16, 116 vorgesehen, d.h. verlaufen nur unwesentlich in den Bereich des zylindrischen Ansatzes 38, 138 hinein. Dies heißt mit anderen Worten auch, dass die größte radiale Abmessung der diametral einander gegenüberliegenden Flügel 41 und 42 bzw. 141 und 142 gleich dem Innendurchmesser des zylindrischen Ansatzes 38, 138 ist.

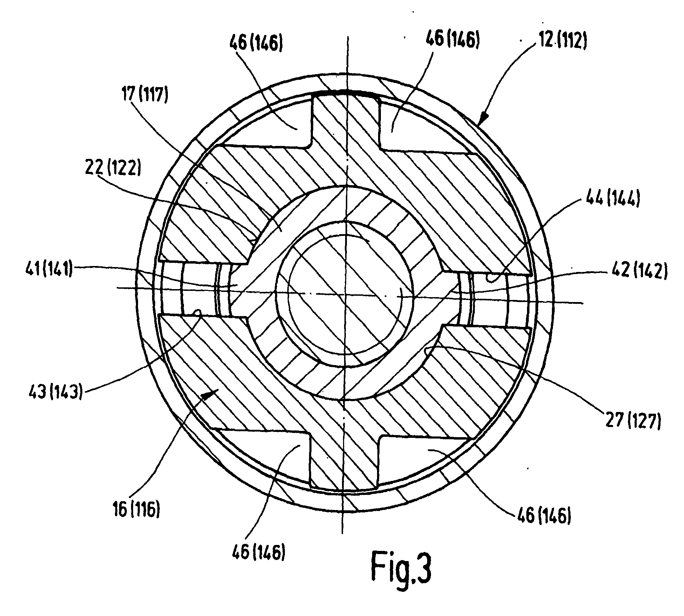

Wie der im Wesentlichen für beide Ausführungsbeispiele geltenden Figur 3 zu entnehmen ist, ist das Spreizelement 16 bzw. 116 an seinem Außenumfang mit vier jeweils achsensymmetrisch bzw. punktsymmetrisch zueinander angeordneten Einschnitten 46 versehen, die in Längsrichtung verlaufen und sich über nahezu die gesamte Länge des Hauptkörpers 23, 123 des Spreizelementes 16, 116 erstrecken. Dadurch ergeben sich definierte Umfangsklemmbereiche des Spreizelementes 16 bzw. 116.

Beim Ausführungsbeispiel der Figuren 1 bis 3 wird nach dem Festsetzen der Spreizvorrichtung 15 in das Innenrohr 11 das Innenelement 17 auf das freie Ende der Verstellschraube 18 aufgeschraubt und danach das Spreizelement 16 über die Verstellschraube 18 gebracht. Daran anschließend wird der äußere Anschlag 26 am herausragenden Ende der Verstellschraube 18 befestigt, wonach das so vervollständigte Ende des Innenrohrs 11 in das Außenrohr 12 eingeschoben werden kann.

Beim Ausführungsbeispiel der Figuren 4 und 5, bei dem die Verstellschraube 118 den angeformten Kopf 126' besitzt und bei dem das Innenelement 117 von der anderen Seite der Verstellschraube 118 her aufgeschraubt ist, bevor die Verstellschraube 118 mit dem Endstopfen 119 fest verbunden worden ist, muss das Spreizelement 116 (wenn es nicht als erstes eingefädelt worden ist) nachträglich über die Verstellschraube 118 und das Innenelement 117 gebracht werden. Hierzu besitzt das Spreizelement 116 gemäß Figur 5 einen axial durchgehenden Schlitz 148, an dem das Spreizelement 116 radial geöffnet und über das Innenelement 117 und die Verstellschraube 118 gebracht werden kann. Beim dargestellten Ausführungsbeispiel ist der durchgehende Schlitz 148 teilweise identisch mit einem der Schlitze 143, 144, jedoch im darüber hinausgehenden Bereich schmäler.

Bei der Bewegung zum Festklemmen des Innenrohrs 11, 111 im Außenrohr 12, 112 mit Hilfe der Spreizvorrichtung 15, 115 wird durch Drehen rechts (bei Linksgewinde) oder links (bei Rechtsgewinde) des Innenrohrs 11, 111 und damit der Verstellschraube 18, 118 gegenüber dem Außenrohr 12, 112 das Innenelement 17, 117 vom Innenrohr 11, 111 weg in Richtung des Pfeils A bewegt, wobei zunächst das Spreizelement 16, 116 in dieselbe Richtung bis hin zum äußeren Anschlag 26, 126 bewegt bzw. gedrückt wird. Danach wird das Spreizelement 16, 116 bei weiterer axialer Bewegung des Innenelements 17, 117 in Richtung des Pfeils A in radialer Richtung gespreizt, so dass sich der Außenumfang des Spreizelements 16, 116 an den Innenumfang des Außenrohrs 12, 112 unter Druck anlegt. In diesem Zustand besitzt die Ringstirnfläche des zylindrischen Ansatzes 38, 138 des Spreizelements 16, 116 einen bestimmten vorgegebenen geringen Abstand a von der inneren Anschlagfläche 28, 128 des Bundes 32, 132. Erfolgt nun in diesem mit mehr oder weniger hohem Drehmoment festgeklemmten Zustand des Innenrohrs 11, 111 im Außenrohr 12, 112 eine stoßartige axiale Belastung ausgehend vom mit beispielsweise einem Griff versehenen Außenrohr 12, 112 zum mit einer Stockspitze versehenen Innenrohr 11, 111 hin, kann sich aufgrund der klemmenden Festlegung des Spreizelementes 16, 116 im Außenrohr 12, 112 das Innenelement 17, 117 axial bewegen. Dies bedeutet, dass sich das Innenelement 17, 117 weiter in den Innenkonus 27, 127 des Spreizelements 16, 116 bewegt, was zu einer weiteren Spreizung des Spreizelementes 16, 116 und damit zu einer Erhöhung der Haltekraft zwischen Innenrohr 11, 111 und Außenrohr 12, 112 führt.

## Patentansprüche

1. Längenverstellbares Rohr (10, 110), insbesondere für Stöcke, mit zumindest einem Außenrohr (12, 112) und einem zur Einstellung der Rohrlänge in das Außenrohr (12, 112) teleskopisch einschiebbaren Innenrohr (11, 111) und mit einer am Einschubende des Innenrohrs (11, 111) gehaltenen Spreizvorrichtung (15, 115), mit der das Innenrohr (11, 111) im Außenrohr (12, 112) axial festklemmbar ist und die ein radial auseinanderdrückbares und mit einem Innenkonus (27, 127) versehenes Spreizelement (16, 116) und ein mit einem gegenläufigen Außenkonus (22, 122) versehenes und im Spreizelement (16, 116) axial verschiebbar aufgenommenes Innenelement (17, 117) und eine axial gerichtete, am Innenrohr (11, 111) drehfest gehaltene Verstellschraube (18, 118), die mit einer Innengewindebohrung (21, 121) im Innenelement (17, 117) in Wirkverbindung ist, aufweist, **dadurch gekennzeichnet, dass** der Innenkonus (27, 127) des Spreizelementes (16, 116) derart verläuft, dass er sich zum Innenrohr (11, 111) hin öffnet, und dass das Spreizelement (16, 116) zwischen einem inneren Anschlag (28, 128) am Innenrohr (11, 111) und einem äußeren Anschlag (26, 126) am freien Ende der Verstellschraube (18, 118) vorzugsweise in geringen Grenzen axial bewegbar gehalten ist.

2. Längenverstellbares Rohr nach Anspruch 1, **dadurch gekennzeichnet, dass** das Spreizelement (16, 116) topfartig ausgebildet und der Topfboden (36, 136) von dem dem Innenrohr (11, 111) abgewandten freien Endbereich der Verstellschraube (18, 118) durchdrungen ist.

3. Längenverstellbares Rohr nach Anspruch 1 oder 2, **dadurch gekennzeichnet, dass** das Spreizelement (16, 116) dem Innenrohr (11, 111) zugewandt einen außendurchmesserkleineren zylindrischen Ansatz (38, 138) aufweist, der an einem Bereich des Einschubendes des Innenrohrs (11, 111) axial geführt ist.

4. Längenverstellbares Rohr nach mindestens einem Ansprüche 1 bis 3, **dadurch gekennzeichnet, dass** der äußere Anschlag (26) von einer auf das freie Ende der Verstellschraube (18) nach dem Aufsetzen des Spreizelements (16) aufgesetzten und axial befestigten Kappe (26) gebildet ist.

5. Längenverstellbares Rohr nach mindestens einem der Ansprüche 1 bis 3, **dadurch gekennzeichnet, dass** der äußere Anschlag (126) durch einen an das freie Ende der Verstellschraube (118) angeformten Kopf (126') gebildet und das Spreizelement (116) an einem Umfangsbereich mit einem über die gesamte axiale Länge verlaufenden Schlitz (148) versehen ist.

6. Längenverstellbares Rohr nach mindestens einem der vorhergehenden Ansprüche, **dadurch gekennzeichnet, dass** die Spreizvorrichtung (15, 115) einen die Verstellschraube (18, 118) axial und drehfest aufnehmenden Stopfen (19, 119) aufweist, der im Innenrohr (11, 111) axial und drehfest gehalten ist und der den inneren Anschlag (28, 128) bildet, von welchem ein Führungszapfen (33, 133) für den zylindrischen Ansatz (38, 138) des Spreizelementes axial absteht.

7. Längenverstellbares Rohr nach mindestens einem der vorhergehenden Ansprüche, **dadurch gekennzeichnet, dass** das mit dem Außenkonus (22, 122) versehene Innenelement (17, 117) einen oder mehr radiale Flügel (41, 42; 141, 142) aufweist, der bzw. die in axialen Schlitzen (43, 44; 143, 144) des Spreizelementes (16, 116) geführt sind.

## Claims

1. An adjustable-length tube (10, 110), especially for sticks, having at least one outer tube (12, 112) and one inner tube (11, 111) that can be inserted telescope-like into the outer tube (12, 112) for adjusting the length of the tube, and having a spreading device (15, 115) that is supported at the insertion end of the inner tube (11, 111), the spreading device being able to clamp the inner tube (11, 111) axially in the outer tube (12, 112) and having a spreading element (16, 116) that can be radially pressed apart and is furnished with an inner cone (27, 127), an interior element (17, 117) that is provided with a reverse-oriented outer cone (22, 122) and is accommodated in the spreading element (16, 116) so as to be axially movable, and an adjusting screw (18, 118) that is axially oriented and is supported in a rotationally fixed manner on the inner tube (11, 111), the adjusting screw having an operational connection to an internally threaded bore (21, 121) in the interior element (17, 117), wherein the inner cone (27, 127) of the spreading element (16, 116) is situated such that it opens in the direction of the inner tube (11, 111), and the spreading element (16, 116) is supported between an inner limit stop (28, 128) on the inner tube (11, 111) and an exterior limit stop (26, 126) on the free end of the adjusting screw (18, 118), so as to be axially movable within narrow limits.

2. The adjustable-length tube as recited in Claim 1, wherein the spreading element (16, 116) is configured in a pot-like fashion, and the pot base (36, 136) is penetrated by the free end area of the adjusting screw (18, 118) that is facing away from the inner tube (11, 111).

3. The adjustable-length tube as recited in Claim 1 or 2, wherein the spreading element (16, 116) has a cylindrical shoulder (38, 138) having a smaller exterior diameter and facing the inner tube (11, 111), the shoulder being axially guided at one area of the insertion end of the inner tube (11, 111).

4. The adjustable-length tube as recited in at least one of Claims I through 3, wherein the exterior limit stop (26) is formed by a cap (26) that is axially secured and is placed onto the free end of the adjusting screw (18) after the spreading element (16) has been set in place.

5. The adjustable-length tube as recited in at least one of Claims 1 through 3, wherein the exterior limit stop (126) is formed by a head (126') that is molded onto the free end of the adjusting screw (118), and the spreading element (116) is provided on a peripheral area with a slot (148) that runs over the entire axial length.

6. The adjustable-length tube as recited in at least one of the preceding claims, wherein the spreading device (15, 115) has a plug (19, 119) that accommodates the adjusting screw (18, 118) in an axial and rotationally fixed manner, the plug being supported axially and in a rotationally fixed manner in the inner tube (11, 111) and forming the inner limit stop (28, 128), from which a guide pin (33, 133) axially stands out for the cylindrical shoulder (38, 138) of the spreading element.

7. The adjustable-length tube as recited in at least one of the preceding claims, wherein the interior element (17, 117) that is provided with the outer cone (22, 122) has one or more radial fins (41, 42; 141, 142), which are guided in axial slots (43,44; 143, 144) of the spreading element (16, 116).

## Revendications

1. Tube (10, 110) réglable en longueur, en particulier pour des bâtons, comportant au moins un tube extérieur (12, 112) et un tube intérieur (11, 111) apte à coulisser de manière télescopique dans le tube extérieur (12, 112) pour le réglage de la longueur du tube, et comportant un dispositif d'écartement (15, 115), qui est maintenu au niveau de l'extrémité d'introduction du tube intérieur (11, 111), par lequel le tube intérieur (11, 111) peut être bloqué axialement dans le tube extérieur (12, 112) et qui comporte un élément d'expansion (16, 116), apte à se dilater radialement et muni d'un cône intérieur (27, 127), et un élément intérieur (17, 117), muni d'un cône extérieur (22, 122) orienté dans le sens opposé et logé en étant mobile axialement dans l'élément d'expansion (16, 116), et une vis de réglage (18, 118), qui est orientée axialement et maintenue immobile en rotation sur le tube intérieur (11, 111) et qui est en liaison active avec une forure taraudée (21, 121), ménagée dans l'élément intérieur (17, 117), **caractérisé en ce que** le cône intérieur (27, 127) de l'élément d'expansion (16, 116) s'étend de telle sorte qu'il s'ouvre vers le tube intérieur (11, 111) et **en ce que** l'élément d'expansion (16, 116) est maintenu mobile axialement, de préférence dans de faibles limites, entre une butée intérieure (28, 128) sur le tube intérieur (11, 111) et une butée extérieure (26, 126) sur l'extrémité libre de la vis de réglage (18, 118).

2. Tube réglable en longueur selon la revendication 1,
**caractérisé en ce que** l'élément d'expansion (16, 116) est conçu en forme de godet et la zone d'extrémité libre, détournée du tube intérieur (11, 111), de la vis de réglage (18, 118) passe à travers le fond du godet (36, 136).

3. Tube réglable en longueur selon la revendication 1 ou 2, **caractérisé en ce que** l'élément d'expansion (16, 116) comporte un talon (38, 138) cylindrique à plus petit diamètre extérieur, qui est orienté vers le tube intérieur (11, 111) et qui est logé axialement sur une zone de l'extrémité d'introduction du tube intérieur (11, 111).

4. Tube réglable en longueur selon l'une quelconque des revendications 1 à 3, **caractérisé en ce que** la butée extérieure (26) est formée par un capuchon (26) qui, après la pose de l'élément d'expansion (16), est posé et fixé axialement sur l'extrémité libre de la vis de réglage (18).

5. Tube réglable en longueur selon l'une quelconque des revendications 1 à 3, **caractérisé en ce que** la butée extérieure (126) est constituée par une tête (126') formée sur l'extrémité libre de la vis de réglage (118), et l'élément d'expansion (116) comporte sur une partie du pourtour une fente (148) qui couvre toute la longueur axiale.

6. Tube réglable en longueur selon l'une quelconque des revendications précédentes, **caractérisé en ce que** le dispositif d'écartement (15, 115) comporte un bouchon (19, 119), qui reçoit la vis de réglage (18, 118) axialement et immobile en rotation et qui est maintenu axialement et immobile en rotation dans le tube intérieur (11, 111) et forme la butée intérieure (28, 128) sur laquelle s'avance en saillie axiale un pivot de guidage (33, 133) pour le talon cylindrique (38, 138) de l'élément d'expansion.

7. Tube réglable en longueur selon l'une quelconque des revendications précédentes, **caractérisé en ce que** l'élément intérieur (17, 117) muni du cône extérieur (22, 122), comporte une ou plusieurs ailettes (41, 42 ; 141, 142) radiales qui est/sont guidée(s) dans des fentes axiales (43, 44 ; 143, 144) de l'élément d'expansion (16, 116).
